# EUROPEAN PATENT APPLICATION

(11) **EP 4 033 571 A1**
(43) Date of publication of application: **27.07.2022**
(21) Application number: 21153081.1
(22) Date of filing: 22.01.2021
(51) Int. Cl.: H01M 4/70, H01M 6/50, H01M 10/613, H01M 10/647, H01M 10/653, H01M 10/654, H01M 50/557, H01G 2/08, H01G 11/28, H01G 11/38

(54) **ASSEMBLY OF ELEMENTS AND ELECTROCHEMICAL ENERGY STORAGE DEVICE**

(71) Applicant: Geyser Batteries Oy, 65200 Vaasa (FI)
(72) Inventor: BELIAKOV, Aleksei Ivanovich, 65200 Vaasa (FI); KHODYREVSKAYA, Nelya Vasilievna, 65200 Vaasa (FI); ZVYAGINTSEV, Mikhail Serafimovich, 65200 Vaasa (FI)
(74) Representative: Mewburn Ellis LLP

(57) **Abstract**

An assembly of elements is described comprising a separator comprising first and second opposing faces, a first electrode on the first face of the separator, a second electrode on the second face of the separator, a collector on the first electrode, and a terminal in electrical connection with the collector. A conductive element is interposed between the collector and the terminal, in contact with both the collector and the terminal. Manufacturing methods are also described. The assembly may be used as part of a cell within an electrochemical energy storage device, for example a primary battery, secondary battery or a supercapacitor.

## Description

### Field of the Invention

The present invention relates to a cell assembly for use in an electrochemical energy storage device such as a secondary battery or a supercapacitor. The invention also relates to electrochemical energy storage devices comprising such cell assemblies, for example supercapacitors or lithium-ion batteries.

### Background of the Invention

The general structure of electrochemical energy storage devices tends to include blocks of cells installed between flat terminals. These components may be held together and placed under pressure using clamps. Each cell includes a separator between two electrodes, for example carbon electrodes impregnated with electrolyte, and collectors in electrical contact with the electrodes. The separator is also impregnated with electrolyte. The manufacture of known devices includes ensuring contact between a collector and a terminal to enable electrical current to be drawn.

For example, US 6 594 138 B1 describes a device in which carbon electrodes are pressed into a first face of a collector, the second face of which is in contact with a terminal. Due to the pressing of the uneven electrode into the first face of the thin, metallic collector, the surface of the second face of the collector becomes uneven and the collector becomes stretched. As a result, due to the increased roughness of the surface of the collector the surface area making contact with the terminal is reduced, increasing contact resistance and increasing the overall internal resistance of the device. This leads to reduced efficiency and wasted energy through the generation of heat.

Existing devices also suffer from a lack of ability to deal with the heat inevitably generated through the internal resistance of the device. This is especially the case for devices operated in heavy-duty mode with high power density, which leads to relatively high internal heat generation, and devices such as supercapacitors used, for example, in regenerative braking systems, which have a high power density. It has been known to incorporate a conductive porous layer of dispersed electrically conducting material, for example dispersed carbon or dispersed nickel group metal powder, into the device to reduce the contact resistance between elements. Such a conductive porous layer is applied to the electrode surface. The manufacturing of such devices is complex due to the need for an additional layer of conductive porous material on the electrode and furthermore, such devices do not properly facilitate the removal of heat from the device.

There is a need for devices which are able to operate with improved efficiency to reduce internal resistance and heat generation, and devices which are able to better deal with the heat generated during use, especially under high power operating conditions.

The present invention has been developed to address the above-mentioned problems.

### Summary of the Invention

A first aspect of the invention is an assembly of elements comprising a separator comprising first and second opposing faces, a first electrode on the first face of the separator, a second electrode on the second face of the separator, a collector on the first electrode and a terminal in electrical connection with the collector, characterised in that a conductive element is interposed between the collector and the terminal, in contact with both the collector and the terminal.

In this way, the assembly comprises a laminate structure including, in order, a separator, an electrode, a collector, a conductive element and a terminal. The presence of the conductive element between the collector and the terminal serves to evenly distribute heat over the surface of the terminal, thereby facilitating efficient heat removal from the assembly during use, for example during use of an electrical energy storage device which contains the assembly. The conductive element ensures that heat generated by the internal resistance of the device during operation quickly dissipates across the whole area of the conductive element and is transmitted evenly across the surface of the terminal and ultimately out of the device, preventing overheating and device failure.

The presence of a conductive element between the collector and the terminal may also serve to overcome problems associated with an uneven collector surface. For example, when the surface of the collector in contact with the conductive element becomes uneven due to the pressing of the electrode into the opposite surface of the collector, the conductive element may conform to some degree with the uneven surface, increasing the contact area between the collector and the conductive element relative to the contact area which would be achieved between the collector and the terminal in the absence of the conductive element. This increased contact area serves to reduce the contact resistance between the collector and terminal, improving the efficiency of the device.

A second aspect of the invention is a cell comprising the assembly as defined in the first aspect.

A third aspect of the invention provides an electrical energy storage device comprising the assembly as defined in the first aspect.

A fourth aspect of the invention provides a method of manufacturing the assembly as defined in the first aspect.

A fifth aspect of the invention provides a back-up power source or a regenerative braking system comprising the device according to the third aspect.

A sixth aspect of the invention is the use of a conductive element within an electrochemical energy storage device to improve heat dissipation from the device.

A seventh aspect of the invention is the use of a conductive element within an electrochemical energy storage device to reduce the internal resistance of the device.

### Brief Description of the Drawings

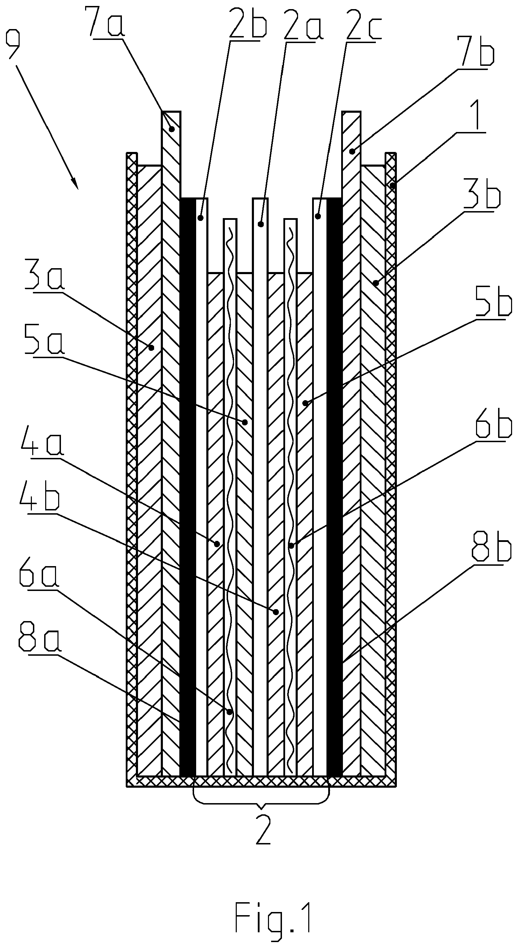

Figure 1 is a schematic cross section of an electrochemical energy storage device comprising an assembly according to the invention.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

A first aspect of the invention is an assembly of elements comprising a separator comprising first and second opposing faces, a first electrode on the first face of the separator, a second electrode on the second face of the separator, a collector on the first electrode and a terminal in electrical connection with the collector, characterised in that a conductive element is interposed between the collector and the terminal, in contact with both the collector and the terminal.

In some embodiments the assembly has a laminate structure comprising:
a first layer comprising (or consisting of) the separator;
a second layer, in contact with the first layer, comprising (or consisting of) the first electrode;
a third layer, in contact with the second layer, comprising (or consisting of) the collector;
a fourth layer, in contact with the third layer, comprising (or consisting of) the conductive element; and
a fifth layer, in contact with the fourth layer, comprising (or consisting of) the terminal.

Herein, the term "conductive element" refers to an element of the assembly which is electrically conductive such that it facilitates the flow of electrical current between the collector and the terminal.

In some embodiments the assembly has a laminate structure, each element making up a layer within the laminate structure, with the layers assembled in the following order: second electrode, separator, first electrode, collector, conductive element, terminal. In some embodiments the second electrode contacts the separator, the separator contacts the first electrode, the first electrode contacts the collector, the collector contacts the conductive element, and the conductive element contacts the terminal.

In some embodiments, the assembly comprises means to hold or clamp together multiple elements of the assembly. In some embodiments, the means to hold or clamp together multiple elements of the assembly comprises opposing clamps operable to place the multiple elements under a compressive force.

In some embodiments the conductive element is thermally conductive. In some embodiments the conductive element has high thermal conductivity.

In some embodiments, the conductive element has a maximum thermal conductivity of at least 50 W m⁻¹ K⁻¹.

Herein, "maximum thermal conductivity" denotes the maximum measured value of thermal conductivity of the conductive element, in W m⁻¹ K⁻¹. For some materials which have anisotropic thermal conductivity, the thermal conductivity may be higher in one direction than another. The maximum thermal conductivity is the maximum measured thermal conductivity for all directions. For example, for a planar material having a thermal conductivity of 150 W m⁻¹ K⁻¹ along its surface and 80 W m⁻¹ K⁻¹ through its thickness, the maximum thermal conductivity is 150 W m⁻¹ K⁻¹.

Thermal conductivity may be measured by laser flash analysis, using laser flash apparatus well-known to the skilled person.

The conductive element may have a maximum thermal conductivity of at least 50 W m⁻¹ K⁻¹, for example at least 60 W m⁻¹ K⁻¹, at least 70 W m⁻¹ K⁻¹, at least 80 W m⁻¹ K⁻¹, at least 90 W m⁻¹ K⁻¹, at least 100 W m⁻¹ K⁻¹, at least 150 W m⁻¹ K⁻¹, at least 200 W m⁻¹ K⁻¹, at least 250 W m⁻¹ K⁻¹, at least 300 W m⁻¹ K⁻¹, at least 350 W m⁻¹ K⁻¹, at least 400 W m⁻¹ K⁻¹, at least 450 W m⁻¹ K⁻¹ or at least 500 W m⁻¹ K⁻¹.

In some embodiments, the conductive element is a planar conductive element, for example a flat sheet or plate. Herein, the term "planar" denotes a structure in which two dimensions (the x- and y-dimensions) are each at least 10 times larger than a third dimension (the z-dimension). In this way, the contact area between the conductive element and the collector and terminal which sandwich the conductive element is increased, providing higher thermal and electrical conduction.

In some embodiments, the lateral extent of the conductive element is larger than the extent of the collector in at least one direction. In other words, the width or length (x- or y-dimension) of the conductive element, or both width and length, may be larger than the corresponding dimension of the collector. In this way, the maximum possible contact area between the collector and the conductive element in said dimension is achieved, because the entire extent of the collector in said dimension makes contact with the conductive element. In some embodiments, the lateral extent of the conductive element is larger than the extent of the collector in all directions, such that the entire surface of the collector makes contact with the conductive element, providing the maximum possible contact area.

In some embodiments, the conductive element has a thermal anisotropy such that the thermal conductivity of the conductive element is larger along the surface of the element (i.e. in-plane, in the x-y direction) than in the through-plane direction (z-direction) through the conductive element from a first face to a second face. In this way, fast transfer of heat generated within the device is ensured laterally across the conductive element in the x-y direction, which provides efficient transfer of heat perpendicular to the direction of ion flow through the cell, thereby efficiently transferring heat out of the device rather than simply transmitting the heat through the device to other components.

In some embodiments, the thermal anisotropy is such that the ratio of the thermal conductivity of the conductive element along the surface of the element (i.e. in the x-y direction) to the thermal conductivity of the conductive element in the through-plane direction (z-direction) is at least 2:1, for example at least 3:1, at least 5:1 or at least 10:1. In some cases the ratio may be at least 100:1.

In some embodiments, the thermal conductivity of the conductive element along the surface of the element (i.e. in the x-y direction) is from 50 to 500 W m⁻¹ K⁻¹, for example from 100 to 500 W m⁻¹ K⁻¹, from 150 to 500 W m⁻¹ K⁻¹, from 200 to 500 W m⁻¹ K⁻¹ or from 200 to 400 W m⁻¹ K⁻¹.

In some embodiments, the thermal conductivity of the conductive element in the through-plane direction (z-direction) is from 3 to 15 W m⁻¹ K⁻¹, for example from 5 to 15 W m⁻¹ K⁻¹, or from 5 to 10 W m⁻¹ K⁻¹.

In some embodiments, the conductive element comprises a flexible, elastic or ductile material such that the material of the conductive element is able to conform to the surface profile of an adjacent element in the assembly when the assembly is placed under a compressive force. For example, the conductive element may comprise a flexible, elastic or ductile material which penetrates into imperfections within the surface of an adjacent element when the assembly is placed under a compressive force.

In some embodiments, the conductive element comprises graphite. In some embodiments, the conductive element is a graphite foil or graphite sheet. In some embodiments, the conductive element is a pyrolytic graphite sheet (PGS). PGS is made by heating a polymeric film under vacuum to its decomposition temperature, at which point it carbonizes and graphitizes to provide an oriented graphite sheet material.

Graphite is a particularly effective material for the conductive element due to its combined properties of (a) electrical conductivity, (b) thermal conductivity, and (b) stable elasticity allowing the graphite to conform to the contours of the surface of the collector to reduce contact resistance.

In some embodiments, the conductive element is a thermally anisotropic graphite sheet. In some embodiments, the conductive element is a thermally anisotropic PGS. Such a conductive element offers the combined advantages of efficient transmission of heat in the x-y direction, out of the device, as well as reduced internal resistance due to the ability of the graphite sheet to penetrate the uneven structure of the collector surface, increasing the contact area and reducing contact resistance. The invention therefore enables the amount of waste heat generated to be reduced, and enables any residual heat which is generated to be efficiently removed from the device.

An example of a commercially available graphite sheet which may be used as the conductive element in the invention is "Graflex" (Unichimtech, RU), which has a thermal conductivity in the in-plane direction of 175 W m⁻¹ K⁻¹, and in the through-plane direction of 5 W m⁻¹ K⁻¹.

The exact dimensions of the conductive element are not limited and will depend upon the intended application of the device which contains the assembly. In a typical device the conductive element may be a planar sheet with a thickness of from 200 to 1000 µm, for example from 200 to 800 µm, 250 to 750 µm, 250 to 700 µm, 400 to 600 µm, or about 500 µm. The x- and y-dimensions of the planar sheet again are not limited. In some embodiments, the x-dimension is longer than the y-dimension. In some embodiments, the x-dimension is from 120 to 200 mm, for example from 120 to 180 mm, 140 to 180 mm, 150 to 170 mm, or about 160 mm. In some embodiments, the y-dimension is from 100 to 180 mm, for example from 120 to 180 mm, 120 to 160 mm, 130 to 150 mm, or about 140 mm.

In some embodiments, the first and second electrodes comprise or consist of carbon electrodes, for example carbon powder electrodes. In some embodiments, the first and second electrodes comprise or consist of woven material, for example woven carbon material. In some embodiments, the first and second electrodes comprise or consist of activated carbon woven material. In some embodiments, the first and second electrodes are impregnated with a suitable electrolyte. The skilled person is aware of suitable electrolytes and can choose an electrolyte based on the desired function of the device.

The electrodes may have a thickness of from 100 to 500 µm, for example from 100 to 400 µm, 100 to 300 µm, 150 to 300 µm, 150 to 250 µm, or about 200 µm.

In some embodiments, the separator is impregnated with a suitable electrolyte. The skilled person is aware of suitable electrolytes and can choose an electrolyte based on the desired function of the device.

In some embodiments, the first and second electrodes and the separator are impregnated with a suitable electrolyte. In some embodiments, the first and second electrodes and the separator are impregnated with the same electrolyte.

The electrolyte may comprise a concentrated salt solution. Exemplary concentrated salt solutions are described in WO 2020/121015 A1, the contents of which are incorporated by reference herein in their entirety. For example, the electrolyte may comprise a solution of metal halide salts, for example metal bromide salts. In some embodiments, the concentration of salt in the concentrated salt solution is at least 25 wt%, for example at least 30 wt%, at least 40 wt% or at least 50 wt%. The concentration may be 25-65 wt%. Herein, wt% with regards to an electrolyte salt solution indicates the weight of solute relative to the total weight of the solution. So, 100 g of a concentrated salt solution of calcium bromide 16 wt%, sodium bromide 16 wt% and zinc bromide 20 wt% would contain 16 g of calcium bromide, 16 g of sodium bromide and 20 g of zinc bromide (with the balance 48 g solvent, such as water).

The separator is ion-permeable. The skilled person is aware of suitable materials to use as a separator and such separators for use in electrical energy storage devices are commercially available. In some embodiments, the separator comprises a planar sheet. In some embodiments, the separator comprises a cellulosic material, for example a material comprising cellulose fibres. In some embodiments, the separator comprises paper. In some embodiments, the separator comprises paper and a binder.

The separator may comprise pores having a size of not more than 5 µm.

The collector may comprise conductive film. In some embodiments the collector comprises a conductive film comprising a material selected from one or more of conductive metal, conductive alloy and conductive plastics. In some embodiments the collector comprises a conductive film comprising a material selected from one or more of Al, Cu, Ni and conductive plastics comprising carbon black or graphite. In some embodiments the collector has a thickness of from 50 to 200 µm, for example from 50 to 150 µm, 50 to 120 µm, 80 to 120 µm, 90 to 110 µm, or about 100 µm.

The assembly may comprise sealant between any two neighbouring elements to hold the elements in place.

In some embodiments the assembly of the first aspect comprises one or more additional elements which may each independently be the same or different to one of the elements already described above. The assembly may comprise one or more additional elements each independently selected from separator, electrode, collector, terminal and conductive element.

The assembly may comprise a second collector on the second electrode. The assembly may comprise a third electrode on the second collector. The assembly may comprise a second separator on the third electrode. The assembly may comprise a fourth electrode on the second separator. The assembly may comprise a third collector on the fourth electrode. The assembly may comprise a second terminal, in electrical connection with the third collector. The assembly may comprise a second conductive element interposed between the second terminal and the third collector, in contact with both the second terminal and the third collector. The second conductive element may have a maximum thermal conductivity of at least 50 W m⁻¹ K⁻¹. The second conductive element may be a graphite sheet. The second conductive element may be identical to the conductive element defined above under the first aspect. All of the options and preferences specified in relation to the conductive element defined above under the first aspect also apply to the second conductive element.

Thus in some embodiments the assembly has a laminate structure, each element making up a layer within the laminate structure, with the layers assembled in the following order: first terminal, first conductive element, first collector, first electrode, first separator, second electrode, second collector, third electrode, second separator, fourth electrode, third collector, second conductive element, second terminal. In this way the assembly comprises two bipolar cells, the two cells sharing a central bipolar collector (second collector), each of the two cells having a separator with two electrodes on either side, and each of the two cells having a terminal at its extremity, the terminal being in electrical connection with a collector via a conductive element. The conductive element may have a maximum thermal conductivity of at least 50 W m⁻¹ K⁻¹.

In some embodiments the assembly comprises further elements such that the assembly comprises a greater number of cells, for example three or more cells.

A second aspect of the invention is a cell comprising the assembly as defined in the first aspect.

The cell according to the second aspect may comprise further components in addition to the components defined in the assembly of the first aspect. For example, the cell may comprise one or more additional components selected from separators, electrodes, collectors, terminals, and conductive elements.

A third aspect of the invention provides an electrical energy storage device comprising the assembly as defined in the first aspect. The electrical energy storage device of the third aspect may comprise the assembly as defined in the first aspect along with one or more additional elements selected from electrodes, separators and collectors as described above, forming a block of one or more cells.

In some embodiments, the device comprises means to hold or clamp together multiple elements of the assembly. In some embodiments, the means to hold or clamp together multiple elements of the assembly comprises opposing clamps operable to place the multiple elements under a compressive force.

The device may further comprise clamps disposed at either end of the block of cells, applying a compressive force to the block of cells.

In some embodiments, the block of cells and clamps holding the block of cells may be disposed within a housing. The skilled person is aware of suitable designs for the housing for electrochemical energy storage devices.

The electrical energy storage device may be a device selected from a secondary battery, a primary battery and a supercapacitor. The electrical energy storage device may be a secondary battery selected from lead-acid batteries, nickel-cadmium batteries, nickel-metal hydride batteries, nickel-zinc batteries, silver-zinc batteries, any type of lithium-ion battery, and any type of lithium-polymer battery.

The electrical energy storage device may be a primary battery selected from manganese oxide-zinc batteries, lithium thionyl-chloride batteries, lithium sulfuril-chloride batteries, zinc-air batteries and lithium-air batteries.

The electrical energy storage device may be a supercapacitor (also known as ultracapacitors) selected from carbon-carbon supercapacitors with aqueous electrolytes (acids, bases, salts, etc.), carbon-carbon supercapacitors with non-aqueous electrolytes (e.g. based on acetonitrile or polycarbonates), hybrid (asymmetrical) supercapacitors with aqueous electrolytes (C/ KOH/ NiOOH, PbO₂(H₂SO₄)C, C(H₂SO₄)Pb, etc.), hybrid supercapacitors with "active" electrolyte (C/Br⁻, Cl⁻, I⁻ / C), hybrid supercapacitors with non-aqueous electrolytes (Li/ -BF₄*AN/C, etc.), and electrochemical energy storage devices with combined method of energy storage on both electrodes: DLC + Faradaic.

The assembly comprising the conductive element of high thermal conductivity described above may be used in any of the above-mentioned electrical energy storage devices to reduce the internal resistance, improve heat removal and improve energy efficiency.

The benefit of the invention may be more evident when the electrical energy storage device is operated in heavy-duty mode in which a high level of internal heat is generated.

An embodiment of the device is shown schematically in Figure 1.

The device 9 includes a block of cells 2 held within an external housing 1. The housing 1 is made from aluminium, steel or an epoxy compound to provide a rigid enclosure for the block of cells 2. The block of cells 2 is pressed together using clamps 3a, 3b at either end of the block. The block of cells 2 in Figure 1 contains two cells, separated by a central bipolar collector 2a and including two further collectors 2b and 2c at either end of the block. It will be understood that any number of cells may be present within the device according to the invention. For example in some cases there may be a single cell, or three or more cells.

Each of the two cells within the block of cells 2 contains a positive electrode 4a, 4b and a negative electrode 5a, 5b, each made of woven activated carbon cloth Kuractive cloth type (CH) CH700-20 (Kuraray Co., Ltd., Japan); and an ion-permeable separator 6a, 6b separating the two electrodes and made of paper impregnated with electrolyte. Collectors 2b, 2c each made of conductive film carry the electrodes of the cells.

Two copper terminals 7a, 7b lie just within the clamps 3a, 3b and are contacted and pressed by the clamps 3a, 3b. Two conductive elements 8a, 8b (components shaded solid black in Figure 1) then lie in contact with each respective copper terminal 7a, 7b, on the opposite side of the terminal to the clamp 3a, 3b. The block of cells 2 then lies between the two conductive elements 8a, 8b. Each conductive element 8a, 8b is therefore interposed between an outer collector 2b, 2c of the block of cells on one side, and a copper terminal of the device on the other side.

The conductive elements 8a, 8b are made of graphite foil ("Graflex", Unichimtech, RU) having a thermal conductivity in the in-plane direction of 175 W m⁻¹ K⁻¹, and in the through-plane direction of 5 W m⁻¹ K⁻¹.

To manufacture the device shown in Figure 1, four carbon electrodes are first cut out of activated woven carbon material. Two electrodes are attached to either side of a first ion-permeable separator made of paper, and the two remaining electrodes are attached to either side of a second ion-permeable separator made of paper. Each of these electrode-separator-electrode assemblies is then impregnated with concentrated salt solution electrolyte which penetrates both the electrodes and the separator. The first of these electrode-separator-electrode assemblies is then attached to a first face of a bipolar collector by applying sealant around the edge of the collector. The second electrode-separator-electrode assembly is then applied in the same manner to the second face of the collector. The whole assembly is then placed between two further collectors which are attached to the outer electrodes in the same manner, using sealant. The as-produced block of cells is then placed between two conductive elements made of graphite foil and the whole structure with the conductive elements at either end is placed between outer copper terminals, such that each conductive element lies between a bipolar collector and a copper terminal. Finally, clamps are used to press the structure together and the clamped structure is placed within a suitable housing. Suitable electrical connections may then be made with the electrical energy storage device.

A fourth aspect of the invention provides a method of manufacturing the assembly as defined in the first aspect. In some embodiments the method involves assembling each of the components of the assembly. In some embodiments the method comprises forming an attachment between any two neighbouring components, for example using a suitable sealant. In some embodiments the method further comprises forming one or more cells comprising the assembly and incorporating the cells into an electrochemical energy storage device.

In some embodiments, the method comprises
(a) providing a first ion-permeable separator and attaching a first electrode to a first face of the first ion-permeable separator and a second electrode to a second face of the first ion-permeable separator, to form an electrode-separator-electrode assembly;
(b) impregnating the electrode-separator-electrode assembly with an electrolyte comprising a salt solution;
(c) placing a first face of a bipolar collector in contact with a first face of the electrode-separator-electrode assembly;
(d) placing a further collector in contact with a second face of the electrode-separator-electrode assembly;
(e) placing a conductive element in contact with the further collector; and
(f) placing a electrically conductive metal terminal in contact with the conductive element.

The conductive element placed in contact with the further collector in step (e) may be a conductive element as described under the first aspect. All options and preferences specified for the conductive element under the first aspect above apply equally to the conductive element under the method of the fourth aspect.

The step (c) of placing a bipolar collector in contact with a first face of the electrode-separator-electrode assembly may comprise attaching the bipolar collector to the first face of the electrode-separator-electrode assembly, for example using suitable sealant or adhesive.

The step (d) of placing a further collector in contact with a second face of the electrode-separator-electrode assembly may comprise attaching the further collector to the second face of the electrode-separator-electrode assembly, for example using suitable sealant or adhesive.

The method of the fourth aspect may further comprise assembling a second electrode-separator-electrode assembly in the manner described in step (a) and placing this in contact with a second face of the bipolar collector. Further components may then be attached to the vacant face of the second electrode-separator-electrode assembly in the same manner as described in steps (d), (e) and (f) to provide a complete block of cells.

In some embodiments the method comprises placing a block comprising one or more cells between clamps and applying a compressive force to the block using the clamps.

In some embodiments the method comprises installing the block of cells within a housing. In some embodiments the method comprises installing the clamped block of cells within a housing.

In some embodiments the method comprises attaching electrical terminals to the block of cells.

A fifth aspect of the invention provides a back-up power source or a regenerative braking system comprising the device according to the third aspect.

A sixth aspect of the invention is the use of a conductive element within an electrochemical energy storage device to improve heat dissipation from the device. The conductive element may have a maximum thermal conductivity of at least 50 W m⁻¹ K⁻¹. All options and preferences specified for the conductive element under the first aspect above apply equally to the conductive element under the sixth aspect.

A seventh aspect of the invention is the use of a conductive element within an electrochemical energy storage device to reduce the internal resistance of the device. The conductive element may have a maximum thermal conductivity of at least 50 W m⁻¹ K⁻¹. All options and preferences specified for the conductive element under the first aspect above apply equally to the conductive element under the seventh aspect.

### Examples

### Cell preparation

Cards with dimensions of 123 x 143 mm were cut out of an activated carbon woven material to provide positive and negative electrodes. The thickness of each electrode was 200 microns.

The electrodes were placed either side of an ion-permeable separator with dimensions 155 x 135 mm, made of paper with mineral fibers with a binder with pores size of not more than 5 microns. The electrodes and the separator were impregnated with electrolyte in the form of a concentrated salt solution of calcium bromide 16 wt%, sodium bromide 16 wt% and zinc bromide 20 wt%. Bipolar collectors with dimensions of 160 x 140 mm made of a conductive film z-flo^{®} 2252 (Transcontinental AC US LLC, USA) with thickness of 100 microns were provided. A layer of sealant was applied around the edges of the collectors and they were attached to the electrodes.

A conductive element made of graphite foil ("Graflex", Unichimtech, RU) was cut out in the form of a card with dimensions of 140 x 160 mm and thickness of 0.2 mm and arranged between the bipolar collector and a copper terminal with thickness 0.5 mm.

The assembled block of cells was pressed to 4 kgf/cm² and installed in a housing with clamps.

A schematic diagram of the as-assembled device is shown in Figure 1. The device 9 includes a block of cells 2 within a housing 1.

The contact area between the terminal, conductive element and bipolar collector increases when pressing the block of cells thanks to penetration of the graphite foil material into micro imperfections of the contacting copper terminal and the bipolar collector, which contributes to minimum contact resistance at the boundary of the terminal-conductive element-bipolar collector junction.

The assembled block of cells ("inventive" block) was tested along with a comparative block of cells which was identical except that it contained no graphite foil component between the bipolar collector and the terminal.

The equivalent series resistance (ESR) of the inventive block of cells is 1.46 mOhm per cell, compared to 2.9 mOhm per cell for the comparative block.

Further tests of both devices under the same operating conditions showed a 10-15°C decrease in operating temperature of the inventive device relative to the comparative device due to reduced internal heat generation for the inventive device caused by the reduced internal resistance and high thermal conductivity of the graphite foil conductive material, ensuring efficient heat removal.

The design of the assembly of the invention has a reduced internal resistance thanks to the ability of the conductive element to penetrate into imperfections in the surfaces of the terminal and the bipolar collector, due to the stable elasticity of the conductive element after pressing.

Moreover, the self-heating temperature of the assembly generated during operation decreases due to reduced contact resistance and high thermal conductivity of the conductive element.

## Claims

1. An assembly of elements comprising:
a separator comprising first and second opposing faces,
a first electrode on the first face of the separator,
a second electrode on the second face of the separator,
a collector on the first electrode, and
a terminal in electrical connection with the collector,
**characterised in that** a conductive element is interposed between the collector and the terminal, in contact with both the collector and the terminal.

2. An assembly according to claim 1, wherein the assembly has a laminate structure comprising:
a first layer comprising the separator;
a second layer, in contact with the first layer, comprising the first electrode;
a third layer, in contact with the second layer, comprising the collector;
a fourth layer, in contact with the third layer, comprising the conductive element; and
a fifth layer, in contact with the fourth layer, comprising the terminal.

3. An assembly according to claim 1 or 2, wherein the conductive element has a maximum thermal conductivity of at least 50 W m⁻¹ K⁻¹, for example at least 100 W m⁻¹ K⁻¹.

4. An assembly according to any one of claims 1 to 3, wherein the conductive element is a planar conductive element.

5. An assembly according to any one of claims 1 to 4, wherein the lateral extent of the conductive element is larger than the lateral extent of the collector in at least one direction.

6. An assembly according to any one of claims 1 to 5, wherein the conductive element has a thermal anisotropy such that the thermal conductivity of the conductive element is larger in the x-y direction than in the z-direction.

7. An assembly according to claim 6, wherein the ratio of the thermal conductivity of the conductive element in the x-y direction to the thermal conductivity of the conductive element in the z-direction is at least 2:1.

8. An assembly according to any one of claims 1 to 7, wherein the conductive element comprises graphite foil.

9. A cell comprising the assembly according to any one of claims 1 to 8.

10. An electrical energy storage device comprising the assembly according to any one of claims 1 to 9.

11. The device according to claim 10, wherein the device is a primary battery, a secondary battery or a supercapacitor.

12. A back-up power source or regenerative braking system comprising the device according to claim 10 or 11.

13. The use of a conductive element, preferably a conductive element having a maximum thermal conductivity of at least 50 W m⁻¹ K⁻¹, within an electrochemical energy storage device to improve heat dissipation from the device or to reduce the internal resistance of the device.

14. A method of manufacturing an assembly according to any one of claims 1 to 8.
